(19) Europäisches Patentamt
European Patent Office
Office européen des brevets

(11) **EP 3 349 925 B1**

(12) **EUROPÄISCHE PATENTSCHRIFT**

(45) Veröffentlichungstag und Bekanntmachung des Hinweises auf die Patenterteilung:
**14.07.2021 Patentblatt 2021/28**

(21) Anmeldenummer: **16766551.2**

(22) Anmeldetag: **16.09.2016**

(51) Int Cl.:
**B30B 11/00** (2006.01)   **B22F 3/00** (2021.01)
**B22F 3/03** (2006.01)   **B30B 11/02** (2006.01)
**B30B 15/02** (2006.01)

(86) Internationale Anmeldenummer:
**PCT/EP2016/071976**

(87) Internationale Veröffentlichungsnummer:
**WO 2017/046333 (23.03.2017 Gazette 2017/12)**

(54) **SINTERPRESSE MIT AXIAL KONTROLLIERTER VERFORMUNG UND VERFAHREN HIERZU**

SINTERING PRESS WITH AXIALLY CONTROLLED DEFORMATION, AND CORRESPONDING METHOD

PRESSE À FRITTER AVEC DÉFORMATION AXIALEMENT CONTRÔLÉE ET PROCÉDÉ ASSOCIÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.09.2015 DE 102015012004**

(43) Veröffentlichungstag der Anmeldung:
**25.07.2018 Patentblatt 2018/30**

(73) Patentinhaber: **GKN Sinter Metals Engineering GmbH**
**42477 Radevormwald (DE)**

(72) Erfinder:
• **SCHMITT, Rainer**
**53343 Wachtberg (DE)**
• **MAASSEN, Robert**
**58455 Witten (DE)**
• **ERNST, Eberhard**
**36124 Eichenzell (DE)**
• **TEKINES, Hasim**
**53343 Wachtberg (DE)**

(74) Vertreter: **Rössler, Matthias et al**
**karo IP Patentanwälte**
**Kahlhöfer Rößler Kreuels PartG mbB**
**Postfach 32 01 02**
**40416 Düsseldorf (DE)**

(56) Entgegenhaltungen:
**JP-A- 2014 001 429    JP-A- 2014 001 429**
**JP-A- 2014 100 738    SU-A1- 1 041 209**
**SU-A1- 1 041 209**

• **DATABASE COMPENDEX [Online] ENGINEERING INFORMATION, INC., NEW YORK, NY, US; 1988, BUDMAN M I ET AL: "Calculation of hydraulic press columns", XP002765052, Database accession no. EIX92090264599 & SOVIET FORGING AND SHEET METAL STAMPING TECHNOLOGY (ENGLISH TRANSLATION OF KUZNECHNO-SHTAMPOVOCHNOE PROIZVODSTVO) 1988, Nr. 2, 1988, Seiten 45-50,**
• **DATABASE COMPENDEX [Online] ENGINEERING INFORMATION, INC., NEW YORK, NY, US; 1988, BUDMAN M I ET AL: "Calculation of hydraulic press columns", XP002765052, Database accession no. EIX92090264599**

**Beschreibung**

Die vorliegende Erfindung betrifft eine Sinterpresse mit zumindest einem Oberstempel und einem Unterstempel, ein Berechnungsverfahren zur Auslegung eines Presswerkzeugs für eine derartige Sinterpresse, einen Stempel für eine derartige Sinterpresse und ein Herstellungsverfahren eines Grünlings unter Nutzung der vorgeschlagenen Sinterpresse.

Mittels Sinterpressen sind Grünlinge aus einem Pulvermaterial herstellbar, wobei die Grünlinge später gesintert werden. Als Pulvermaterial können Keramikpulver und/oder Metallpulver genutzt werden. Grünlinge werden hergestellt, um daraus unterschiedlichste Komponenten zu fertigen. Dieses können symmetrische, insbesondere rotationssymmetrische Komponenten, aber auch asymmetrische Komponenten sein. Letzteres ist jedoch mit größerem Aufwand verbunden.

Aus der SU 1 041 209 A1 ist eine Sinterpresse mit Unterstempeln und Oberstempeln bekannt, deren Kopfstücke symmetrisch zu einer Axialachse der Sinterpresse ausgeführt sind.

Aus der Database Compendex Engineering Information, Inc., New York, NY, US; 1988 geht ein Verfahren zur Berechnung der in einem Pressverfahren auftretenden Prozesskräfte hervor.

Aus der JP 2014-001429 A ist eine Sinterpresse mit Stempel bekannt, die zur Herstellung von asymmetrisch ausgeführten Grünlingen vorgesehen ist.

Aufgabe der vorliegenden Erfindung ist es, eine Sinterpresse mit Stempeln hoher Langlebigkeit zu schaffen, mit denen auch kompliziertere Geometrien, insbesondere asymmetrische Geometrien, herstellbar sind.

Diese Aufgabe wird mit einer Sinterpresse mit den Merkmalen des Anspruches 1, mit einem Berechnungsverfahren mit den Merkmalen des Anspruchs 6, einem ersten Stempel mit den Merkmalen des Anspruchs 10 und einem Verfahren zum Verpressen eines sinterfähigen Werkstoffs mit den Merkmalen des Anspruchs 11 gelöst. Weitere vorteilhafte Ausgestaltungen und Weiterbildungen gehen aus den Unteransprüchen wie auch aus der Beschreibung und den Figuren hervor. Die Formulierung der jeweiligen unabhängigen Ansprüche stellt einen ersten Versuch dar, die nachfolgend noch näher beschriebene Erfindung zu beschreiben, ohne aber diese beschränken zu wollen. Vielmehr können ein oder mehrere Merkmale gestrichen, ergänzt oder durch ein oder mehrere Merkmale ausgetauscht werden, die nachfolgend beschrieben werden.

Es wird eine Sinterpresse mit zumindest einem Oberstempel und einem Unterstempel vorgeschlagen, mit einem Pulverspeicher zur Befüllung einer Matrize der Sinterpresse mit einem sinterfähigen Pulvermaterial und mit einer Matrize zur Herstellung eines Grünlings mittels des Pulvermaterials aus dem Pulverspeicher. Ein erster Stempel der Oberstempel und/oder Unterstempel weist einen Stempelkopf außermittig und asymmetrisch zu einer Axialachse der Sinterpresse auf. Der Stempelkopf ist ohne eine Führung innerhalb der Matrize entlang einer Matrizenaußenwand, eines Dorns und/oder entlang eines benachbarten Stempels in der Matrize bewegbar. Der erste Stempel besitzt zumindest in einem Abschnitt zwischen Stempelkopf und Stempelfuß, vorzugsweise über den gesamten Bereich zwischen Stempelkopf und Stempelfuß, eine asymmetrische, insbesondere eine nichtrotationssymmetrische Form, die ein radiales Kippen des Stempels und ein Längsschleifen des Stempelkopfes an einer benachbarten Außenfläche in der Matrize beim Einfahren und Ausfahren daraus während eines Pressvorgangs bei der Herstellung des Grünlings zumindest verringert, insbesondere verhindert.

Die Asymmetrie des Stempelkopfs kann sich zum Beispiel dadurch ergeben, dass ein Grünling geformt werden soll, der zum Beispiel nicht überall rotationssymmetrisch ist. So kann ein in der Matrize beim Pressen angeordneter Bereich des Stempels außermittig und auch asymmetrisch zur Axialachse angeordnet sein. Auch kann ein Stempel Verwendung finden, der mehrere Bereiche innerhalb der Matrize in Verbindung mit dem zu verpressenden Pulver aufweist, wobei die Bereiche sich voneinander unterscheiden. So können unterschiedliche Höhen, unterschiedliche Oberflächengeometrien oder verschiedene Formen zu der Asymmetrie in Bezug auf die Axialachse führen. Es wurde nunmehr folgendes herausgefunden: Durch die Außermittigkeit und die Asymmetrie in Bezug auf die Axialachse wird ein Biegemoment im Stempel erzeugt, wenn dieser eine Presskraft auf das Pulvermaterial ausübt. Das Biegemoment hat dazu geführt, dass sich eine Reibung entlang des Stempelkopfs mit der benachbarten Matrize, einem Dorn oder einem andern Stempel einstellt. Eine Reibung zum Beispiel an einem Dorn wird dadurch verringert, dass der Stempelkopf nunmehr durch die asymmetrische Gestaltung der Geometrie des Stempels zwischen Stempelkopf und Stempelfuß keine radial wirkende Kippneigung hat. Diese Kippneigung hat in der Vergangenheit zu einem höheren Verschleiß derartiger Stempel mit außermittig angeordneten Stempelköpfen geführt als es bei üblichen rotationssymmetrischen Stempeln der Fall ist. Nunmehr aber ist es gelungen, diesem höherem Verschleiß dadurch zu begegnen, dass der Stempel in sich so gestaltet wird, dass das Biegemoment so abgestützt wird, dass eine Biegeverformung verringert bzw. im Stempel selbst zumindest so weit aufgefangen wird, dass es keine oder höchstens noch eine sehr geringe Biegeverformung gibt. Anders als in der Vergangenheit, in der man davon ausging, dass durch einen hohen Materialeinsatz eine ausreichende Biegesteifigkeit des Stempels geschaffen werden kann, wird nunmehr ein anderer Weg eingeschlagen: die Geometrie des Stempels wird ebenfalls asymmetrisch ausgelegt, um damit der Asymmetrie des Stempelkopfs entgegenzuwirken. Diese Asymmetrie kann zum Beispiel durch Materialöffnungen in einer Wandung, durch Weglassen von Material in einer Wandung, durch Verstrebungen an Stelle oder unterstützend zu Wandstrukturen wie auch durch andere, gleichwirkende Maßnahmen erzielt werden.

Beispielsweise wird vorgeschlagen, dass entlang eines Querschnitts des ersten Stempels senkrecht zu seiner Bewegungsachse die asymmetrische Form eine asymmetrische Wandung aufweist, insbesondere der erste Stempel eine unterschiedliche Dicke von gegenüberliegenden Seiten der Wandung hat. Als asymmetrisch im Bereich zwischen Stempelkopf und Stempelfuß ist insbesondere eine Abweichung von einer Rotationssymmetrie zur Axialachse der Sinterpresse aufzufassen. Die Asymmetrie kann eine andere Gestalt von einander gegenüberliegenden Bereichen der Form umfassen. Auch kann ein anderes Material zum Einsatz kommen, ein zusätzliches Material oder auch ein Weglassen von Material. Beispielsweise kann eine Asymmetrie durch unterschiedliche Wandstärken, durch unterschiedliche Gestaltungen, durch Öffnungen, durch Verstrebungen, durch die geometrische Gestaltung wie zum Beispiel kegelförmig, glockenförmig oder ähnliches erzielt werden. Auch kann zum Beispiel eine Fachwerkkonstruktion genutzt werden, um eine Verbindung vom Stempelfuß zum Stempelkopf zu schaffen. Mittels der geschaffenen Asymmetrie wird im Stempel selbst bevorzugt ein Biegeausgleich geschaffen. Dadurch kann zum Beispiel einem Biegen des Stempelkopfs bzw. des Stempels in eine Richtung entgegengewirkt werden.

Eine Form der Asymmetrie wird beispielsweise durch eine Kombination von in Bezug auf die Axialachse der Sinterpresse schrägem Übergang von einer Zylinderringform zu einer Kegelringform erreicht, wenn der Stempel sich vom Stempelfuß hin zum Stempelkopf verschlankt. Der Stempelfuß hierbei, wie auch in anderen Konfigurationen, ist symmetrisch, bevorzugt rotationssymmetrisch zu der Axialachse der Sinterpresse angeordnet, vorzugsweise mit beispielsweise einer Fußebene, die senkrecht zur Axialachse der Sinterpresse verläuft und direkt auf einem Adapter der Sinterpresse aufsitzt. Ein derartiger Stempel weist damit einen symmetrischen Stempelfuß und einen asymmetrischen Stempelkopf auf, wobei durch den Übergang eine Kompensation von Biegekräften im Stempel selbst erfolgt. Der Übergang vom Zylinderring über eine zum Beispiel eierformartige oder ellipsenformartige sich verschlankende Ringgestalt hin zu einer bevorzugt Kegelringform erlaubt, ebenfalls die zugehörige Wandung so anzupassen, insbesondere asymmetrisch zu gestalten, dass Biegekräfte bzw. Biegemomente kompensierbar sind.

Bevorzugt weist erzeugt ein Werkzeug mit einem ersten Stempel, der einen symmetrischen Stempelfuß und einen asymmetrischen Stempelkopf aufweist, einen Grünling, der einen Gesamtschwerpunkt auf der Axialachse der Sinterpresse hat.

Eine Ausgestaltung sieht zum Beispiel vor, dass die Sinterpresse ein oder mehrere Stempel aufweist, die ineinander verfahrbar sind. Bevorzugt weisen zumindest einige Stempel, vorzugsweise alle Stempel, eine kegelformartige Erweiterung auf. Vorzugsweise sind derartige Pressen wie auch Stempel so gestaltet, wie es aus der noch nicht veröffentlichten DE 10 2014 003 726 der Anmelderin mit den Titel "Presse zum Herstellen maßhaltiger Grünlinge und Verfahren zum Herstellen" hervorgeht, auf die im Rahmen der Offenbarung diesbezüglich vollumfänglich Bezug genommen wird. Möglichkeiten, Stempel herzustellen, wie zum Beispiel mittels additiver Fertigungsverfahren allein oder in Kombination mit anderen Herstellungsverfahren, gehen aus den noch nicht veröffentlichten DE 10 2015 01784 und DE 10 2015 01785 hervor. Auf diese wird ebenfalls hinsichtlich der Herstellung, aber auch hinsichtlich der Gestaltung der Stempel vollumfänglich im Rahmen der Offenbarung Bezug genommen.

Eine weitere Ausgestaltung sieht beispielsweise vor, dass die asymmetrische Wandung eine mit Verstrebungen versehene Wandung ist. So kann zum Beispiel ein Bereich der Wandung eine zusätzliche Abstützung erhalten, insbesondere als Versteifung. Auch kann die Wandung bereichsweise durch ein oder mehrere Verstrebungen ersetzt werden.

Vorzugsweise ist ein asymmetrischer Bereich zwischen Stempelkopf und Stempelfuß in etwa gegenüberliegend zu einem asymmetrisch abstehenden Ende des Stempelkopfes angeordnet. Hierbei kann auch ein Höhenunterschied entlang der Axialachse der Sinterpresse für den asymmetrischen Bereich vorliegen, so dass es zu einem schräg Gegenüberliegen kommt. Beispielsweise ist ein Übergang von einer Geometrieform in eine andere Geometrieform schräg in Bezug auf die Axialachse der Sinterpresse entlang des Umfangs verlaufend. Hierbei ist es beispielsweise bevorzugt, wenn etwa um 180° verdreht eine Anpassung der Geometrieform zum asymmetrischen Ende des Stempelkopfes angeordnet ist. Eine weitere Ausgestaltung sieht beispielweise vor, dass eine Anpassung der Geometrieform sich quasi aufteilt. So können um den Umfang herum mehrere Verstärkungen bzw. Schwächungen vorliegen, die es erlauben, dass über die dadurch gebildete Geometrieform eine Biegung aufgrund der wirkenden Presskraft im Stempel zumindest weitestgehend absorbiert wird.

Bei einer Auslegung zum Stempel-internen Ausgleichen einer Axialkraft, die beabstandet zu der Axialachse der Sinterpresse wirkt und hierbei ein Biegemoment in dem Stempel initiiert, kann zum Beispiel die Biegespannung herangezogen werden, um zu überprüfen, ob die Auslegung des Stempels dem Anforderungsprofil genügt. Als Biegespannung ist hierbei diejenige Spannung zu verstehen, die sich aufgrund der Biegung, d. h. der Momentenbeanspruchung einstellt. Diese ergibt sich zu:

$$\sigma_M = (M/I) \cdot z = M/W$$

wobei M das skalare Biegemoment, I das Flächenträgheitsmoment, z der Abstand vom Querschnittsschwerpunkt zur Randfaser der Geometrieform und W das Widerstandsmoment ist. Mit der Darstellung in Form eines Spannungstensors, zum Beispiel wenn man die Schnittflächen eines Körpers, beispielsweise drei Schnittflächen jeweils senkrecht zu einer Richtung eines kartesischen Koordinatensystems wählt, kann die jeweilige auftretende Spannung geprüft werden. So ergeben sich beispielsweise drei Kräfte in drei Schnittflächen des Körpers entsprechend der folgenden Matrix:

$$ S = \begin{bmatrix} \sigma_x & \tau_{xy} & \tau_{xz} \\ \tau_{yx} & \sigma_y & \tau_{yz} \\ \tau_{zx} & \tau_{zy} & \sigma_z \end{bmatrix} $$

Diese Betrachtung im kartesischen Koordinatensystem bietet sich vor allem für einen Bereich des Stempelkopfs an, der noch nicht übergegangen ist in eine runde, insbesondere kreisförmige Gestalt, sondern vielmehr noch eine eckige Geometrie aufweist. In einem Bereich der Geometrieform, die hingegen gerundet ist, sei es kreisförmig oder auch ellipsenförmig, wird hingegen bevorzugt auf ein orthogonales oder auch ein Zylinder-Koordinatensystem bei der Berechnung abgestellt. Über eine entsprechende Transformation können sodann Übergänge von einer Geometrieform in eine andere Geometrieform geschaffen werden.

Weiterhin besteht die Möglichkeit, mittels Tensorrechnung die Auslegung der Geometrieform vorzunehmen. Die Tensorrechnung ermöglicht beispielsweise, den Spannungszustand zunächst unabhängig von einem bestimmten Koordinatensystem zu beschreiben und erst nach einer Herleitung des jeweiligen Berechnungsverfahrens die Komponentengleichungen den geometrischen Eigenschaften des Körpers anzupassen, beispielsweise in Zylinderkoordinaten oder Kugelkoordinaten. Die Nutzung eines Verzerrungstensors, d. h. eines Tensors zweiter Stufe, der das Verhältnis von Momentankonfiguration zur Ausgangskonfiguration bei der Deformation von kontinuierlichen Körpern und damit Veränderung der gegenseitigen Lagebeziehungen der Materieelemente beschreibt, wird bevorzugt dadurch unterstützt, dass auch eine Geschwindigkeit, mit der die Spannung aufgeprägt wird, mitberücksichtigt wird. Die Verzerrungsgeschwindigkeit, gebildet aus der Ableitung des Verzerrungstensors, erlaubt insbesondere einem unterschiedlichen Materialverhalten Rechnung tragen zu können. Eine Änderung der äußeren Gestalt des Stempels in Form von beispielsweise Dehnung, Stauchung, Scherung oder anderem kann somit auch auf diese Weise abgeschätzt und die Geometrie des Stempels dementsprechend solange angepasst werden, bis im Bereich der Matrize und insbesondere im Bereich des Stempelkopfes unter Presskraft eine Biegung ausgeschlossen ist. Auch kann hierbei ermittelt werden, mit welcher Stempelgeschwindigkeit der Stempelkopf bevorzugt in die Matrize einfährt bzw. abbremst. Für eine Serienfertigung kommt es daher darauf an, einerseits eine vorgebbare Mindestgeschwindigkeit und damit Taktung einzuhalten, zum Anderen dabei aber auch den geringstmöglichen Biegeeinfluss zu finden.

Gemäß einer weiteren Ausgestaltung ist vorgesehen, dass der erste Stempel in einen zweiten Stempel verfahrbar ist, wobei der zweite Stempel ebenfalls eine asymmetrische Form zwischen Kopfstück und Fußstück aufweist. Beispielsweise kann der zweite Stempel in Bezug auf die Sinterpressenachse ebenfalls nichtrotationssymmetrisch angeordnet sein.

Gemäß einer Weiterbildung ist vorgesehen, dass zumindest der erste Stempel aus verschiedenen Teilen zusammengesetzt ist. Dieses erlaubt zum Beispiel, unterschiedliche Materialien mit unterschiedlichen Elastizitätmoduli einzusetzen und deren Verteilung bzw. Anordnung im Stempel an eine gewünschte Biegemomentenkompensation anzupassen. So können auch unterschiedliche Fertigungsverfahren für unterschiedliche Teile des Stempels genutzt werden, zum Beispiel, weil diese Fertigungsverfahren prinzipbedingt unterschiedliche Genauigkeiten ermöglichen und verschiedene Teile des Stempels auch voneinander unterschiedliche Genauigkeiten benötigen.

Gemäß einem weiteren Gedanken der Erfindung, der unabhängig von der obigen Sinterpresse, wie auch in Abhängigkeit von der obigen Sinterpresse sein kann, wird ein Berechnungsverfahren zur Auslegung eines Presswerkzeugs einer Sinterpresse vorgeschlagen, vorzugsweise für eine Herstellung von metallischen Grünlingen, wobei für einen ersten Stempel des Presswerkzeugs, der einen Stempelkopf außermittig und asymmetrisch zu einer Axialachse der Sinterpresse aufweist, eine Biegung berechnet wird, die sich bei einem Kraftzufluss wie auch bei einem Kraftabfluss bei einem Pressvorgang eines Grünlings in der Sinterpresse einstellt, und eine Steifigkeit des ersten Stempels durch Anpassung einer Asymmetrie einer Form des ersten Stempels zwischen Kopfstück und Fußstück daran angepasst wird, wobei überprüft wird, ob ein Ausgleich eines axialen Kippmoments am ersten Stempel, hervorgerufen durch die Außermittigkeit des Stempelkopfs, durch die Anpassung der Asymmetrie der Form sich verbessert hat.

Die Asymmetrie, die einzustellen ist, kann hierbei mittels eines Katalogs an unterschiedlichen Maßnahmen ermittelt werden, wie sie oben schon beschrieben wurden. Es besteht die Möglichkeit, mit einer Grundkonfiguration zu beginnen. Sodann können in einem ersten Entwurf verschiedene Maßnahmen angewendet und sodann gegeneinander bewertet werden. Des Weiteren besteht die Möglichkeit, eine Vorgabe an miteinander zu kombinierenden Maßnahmen einzustellen. Auf Basis dieser Vorgabe kann sodann mittels eines computerbasierten Berechnungsprogramms eine Prüfung hinsichtlich der Kompensation von aufgebrachtem Pressdruck durch den modellierten Stempel erfolgen. Fällt hierbei auf, dass das Modell des Stempels noch nicht in allen Bereichen diejenigen Ergebnisse zeigt, die vorgebbar sind, besteht beispielsweise die Möglichkeit der weiteren Anpassung. Dieses kann über einen entsprechenden Algorithmus erfolgen, der zumindest soweit einstellbar ist, dass dieser Vorgaben enthält, durch welche Maßnahme oder Maßnahmen eine weitere Anpassung erfolgen solle.

Eine weitere Ausgestaltung sieht vor, dass eine Randbedingung eingestellt wird, nach der der Stempel unter Presslast ohne Verschiebung in eine Kipprichtung reagiert. So kann beispielsweise vorgebbar sein, dass der Stempel starr bleibt. Auch kann vorgebbar sein, dass dieser ein gleichmäßiges Einfedern in axialer Richtung aufweist.

Bevorzugt ist es, wenn eine Topologieoptimierung am ersten Stempel erfolgt, wobei mittels zumindest eines Optimierungsalgorithmus in einem vorgebbaren Designraum überprüft wird, durch welche Materialweglassung ein Verhalten des Stempels unter Presskraft die vorgebbaren Randparameter einhält, wobei der Designraum so eingestellt wird, dass dieser eine sich vom Kopfstück zum Fußstück verbreiternde Form des ersten Stempels umfasst. Vorzugsweise gehen der Materialweglassung ein oder mehrere Materialaufdickungen vorher oder folgen nach. Beispielsweise kann hierfür die Topologieoptimierung verlassen werden, Material mittels CAD aufgetragen werden und erneut in die Topologieoptimierung gegangen werden.

Weiterhin bevorzugt ist es, wenn das Verfahren ein Baukastensystem nutzt, aus dem verschiedene Teile eines Stempels jeweils als Modul entnehmbar und zusammensetzbar sind, wobei das jeweilige Modul unterschiedliche Geometrien, unterschiedliche Werkstoffe und unterschiedliche Herstellungsverfahren miteinander verbindet.

Gemäß einem weiteren Gedanken der Erfindung, der unabhängig von der obigen Sinterpresse und dem obigen Verfahren wie auch jeweils abhängig davon sein kann, wird ein erster Stempel bevorzugt für eine Sinterpresse vorgeschlagen, wobei der erste Stempel eine asymmetrische Form in einem Bereich zwischen Kopfstück und Fußstück aufweist, mit einem Stempelkopf, der außermittig und asymmetrisch zu einer Axialachse der Sinterpresse ist. Des Weiteren kann ein derartiger erster Stempel ein oder mehrere Merkmale aufweisen, wie sie weiter oben schon oder auch noch nachfolgend im Zusammenhang mit der Sinterpresse beschrieben sind. Der erste Stempel ist bevorzugt ineinander verfahrbar mit einem zweiten Stempel, der ebenfalls einen Stempelkopf aufweist, der außermittig und asymmetrisch zu einer Axialachse der Sinterpresse ist.

Gemäß wiederum einem weiteren Gedanken der Erfindung, der unabhängig von einem oder mehreren der obigen Gedanken wie auch jeweils abhängig davon sein kann, wird ein Verfahren zum Verpressen zumindest eines pulverförmigen Werkstoffs in einer Sinterpresse zu einem zu sinternden Grünling vorgeschlagen, mit einem Einfahren von Oberstempel und Unterstempeln in eine Matrize, mit einem Befüllen der Matrize mit dem pulverförmigen Werkstoff und mit einem Verpressen des pulverförmigen Werkstoffs, wobei ein Grünling gebildet wird, der eine zu einer Axialachse der Sinterpresse unsymmetrische Geometrie mittels eines ersten Stempels erhält, wobei der erste Stempel eine asymmetrische Wandung aufweist und bei einem Einfahren und Ausfahren in die Matrize berührungslos an dieser vorbeifährt. Mittels dieses Vorganges wird ein Schleifen, insbesondere eine Seitenreibung während des Verfahrens in der Matrize, besonders bei Einwirken eines Pressdrucks vermieden. Hierbei wird bevorzugt ein Ausgleich eines wirkenden Biegemoments aufgrund der asymmetrischen Belastung entlang der Axialachse aufgrund der außermittigen Anordnung des Stempelkopfes aufgrund der Konstruktion des ersten Stempels aufweisend die asymmetrische Wandung erzielt. Die Kompensation des Biegemoments erfolgt dadurch im Stempel selbst, ohne dass es zu einem Durchbiegen, einem seitlichen Neigen oder einer sonstigen Verformung kommt, die zu einem Reiben des Stempelkopfes an einer dazu benachbarten Fläche führen.

Weitere vorteilhafte Ausgestaltungen und Weiterbildungen gehen aus den nachfolgenden Figuren hervor, die mit anderen Merkmalen der Erfindung auch aus der Beschreibung verknüpfbar sind. Einzelne Merkmale aus einzelnen Figuren sind nicht auf diese beschränkt. Vielmehr können ein oder mehrere Merkmale aus ein oder mehreren Figuren wie auch aus der Beschreibung zusammen weitere Ausgestaltungen bilden. Insbesondere sind die Figuren nicht beschränkend sondern beispielhaft auszulegen. Es zeigen:

Fig. 1      eine Schrägansicht auf einen Ausschnitt einer Sinterpresse mit zwei Stempeln, deren asymmetrische Stempelköpfe in einer Matrize verfahrbar sind,

Fig. 2      einen Querschnitt durch die Sinterpresse aus Fig. 1,

Fig. 3 bis 6      die Sinterpresse aus den Fig. 1 und 2 vergleichend in verschiedenen Darstellungen,

Fig. 7      eine Schrägansicht auf einen Ausschnitt einer weiteren Ausführungsform einer Sinterpresse mit zwei Stempeln, bei der Biegemomente durch die Gestaltung der Stempel kompensiert werden können,

Fig. 8      eine Schrägansicht auf die beiden Stempel aus Fig. 7, und

Fig. 9      eine Schrägansicht auf einen der beiden Stempel aus Fig. 7 und Fig. 8.

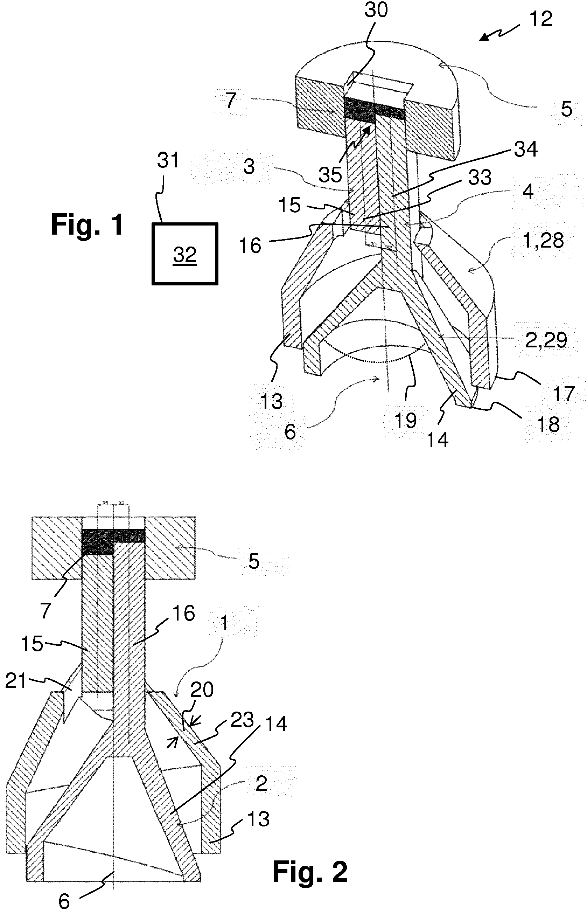

Fig. 1 zeigt in einer Schrägansicht einen Ausschnitt aus seiner Sinterpresse 12 mit zwei Stempeln (einem ersten Stempel 1 und einem zweiten Stempel 2), deren Stempelköpfe (erster Stempelkopf 3 und zweiter Stempelkopf 4) in einer Matrize 5 verfahrbar sind. Durch dieses Verfahren der Stempelköpfe 3, 4 kann in der Matrize 5 ein Grünling 7 aus Pulver geformt werden. Die Matrize 5 weist eine Matrizenaußenwand 30 auf, innerhalb derer der Grünling 7 geformt werden kann, wobei der jeweilige Stempelkopf 3, 4 auf eine Stirnfläche 35 des Grünlings 7 einwirken kann. Die beiden Stempelköpfe 3, 4 sind jeweils für sich asymmetrisch zu einer Axialachse 6 der Sinterpresse 12 ausgeführt und außermittig zu der Axialachse 6 angeordnet. Der erste Stempel 1 stellt in dieser Ausführungsform einen Oberstempel 28 dar und der zweite Stempel 2 einen Unterstempel 29. Der erste Stempel 1 ist entlang einer ersten Bewegungsachse 33 bewegbar, der zweite Stempel 2 entlang einer zweiten Bewegungsachse 34.

Schematisch eingezeichnet ist weiterhin ein Pulverspeicher 31 zur Befüllung der Matrize 5 der Sinterpresse 12 mit einem sinterfähigen Pulvermaterial 32, aus dem der Grünling 7 geformt werden kann. Der Grünling 7, der in der gezeigten beispielhaften Ausführung eine zu der Axialachse 6 nicht-rotationssymmetrische Form aufweist, kann nach Einwirken der Presskraft über die Stempel 1, 2 so entlastet werden, dass eine Rissbildung im Grünling 7 verhindert wird. Daher ist die jeweilige Geometrie des ersten Stempels 1 und des zweiten Stempels 2 vorzugsweise derart ausgeführt, dass nicht nur eine interne Kompensation eines Biegemoments erfolgen kann. Vielmehr sind beide Stempel 1, 2 vorzugsweise derart ausgeführt, dass deren elastisches Verhalten beim Entlasten von der Presskraft gleich ist. Bei Entlastung beider Stempel 1, 2 kann es damit zu einer gleichmäßigen Entlastung des Grünlings 7 über die gesamte Stirnfläche 35 des Grünlings 7 kommen. Dies kann das Auftreten von ungleichmäßigen Spannungen und damit von eventuell ungleichmäßig verteilten Scherkräften verhindern, die zu einer Scherung im Material des Grünlings 7 und damit zu einer Rissbildung im Grünling 7 führen können. Hierzu wird auch auf den oben schon genannten Stand der Technik und auf die weiter oben beschriebenen Möglichkeiten verwiesen, die sich aus der Gestaltung der Stempel 1, 2 ergeben.

Der erste Stempel 1 ist in den zweiten Stempel 2 verfahrbar. Beide Stempel 1, 2 weisen jeweils einen kegelförmigen Abschnitt (erster kegelförmiger Abschnitt 13 und zweiter kegelförmiger Abschnitt 14) an einem jeweiligen Stempelfuß (erster Stempelfuß 17 und zweiter Stempelfuß 18) und einen geraden Abschnitt (erster gerader Abschnitt 15 und zweiter gerader Abschnitt 16) an dem jeweiligen Stempelkopf 3, 4 auf. Durch das Vorliegen der kegelförmigen Abschnitte 13, 14 und der geraden Abschnitte 15, 16 wird die oben beschriebene Asymmetrie realisiert. Diese Asymmetrie ist durch eine Kombination von Zylinderringform und Kegelringform gebildet. Dabei ist die Zylinderringform hier durch die geraden Abschnitte 15, 16 realisiert. Die Kegelringform ist hier durch die kegelförmigen Abschnitte 13, 14 realisiert. Zwischen kegelförmigen Abschnitten 13, 14 und geraden Abschnitten 15, 16 existiert ein Übergang. Durch diese Gestaltung verschlankt sich der jeweilige Stempel 1, 2 vom jeweiligen Stempelfuß 17, 18 hin zum jeweiligen Stempelkopf 3, 4. Die Bezeichnung Stempelfuß 17, 18 wird hier synonym mit dem weiter oben auch verwendeten Begriff "Fußstück" verwendet und die Bezeichnung Stempelkopf 3, 4 synonym mit dem weiter oben auch verwendeten Begriff "Kopfstück" verwendet. Durch diese Geometrie der Stempel 1, 2 kann eine Kompensation eines Biegemoments erreicht werden. Dazu können z. B. eine unterschiedliche Wandungsdicke, Wandöffnungen und/oder schräge Übergänge zwischen dem jeweiligen geraden Abschnitt 15, 16 und dem jeweiligen kegelförmigen Abschnitt 13, 14 des jeweiligen Stempels 1, 2 beitragen.

Die Geometrien der Stempel 1, 2 sind voneinander verschieden, insbesondere sowohl hinsichtlich des jeweiligen geraden Abschnitts 15, 16, wie auch hinsichtlich des jeweiligen kegelförmigen Abschnitts 13, 14. Dies kann aufgrund von unterschiedlich auftretenden Kräften, sowie aufgrund von unterschiedlichen Abmessungen der Stempel 1, 2 vorteilhaft sein.

Auch ein Spreizwinkel 19 (d. h. ein Kegel-Öffnungswinkel) des jeweiligen kegelförmigen Abschnitts 13, 14 kann bei den beiden Stempeln 1, 2 unterschiedlich groß sein. Der Übersichtlichkeit wegen ist der Spreizwinkel 19 nur für den zweiten Stempel 2 eingezeichnet. In einer Endstellung befinden sich die jeweiligen Stempelfüße 17, 18 vorzugsweise auf verschiedenen Ebenen.

Bevorzugt werden derartige Stempel in Sinterpressen eingesetzt, wie sie aus der noch nicht veröffentlichten Anmeldung DE 10 2014 201 966 der Anmelderin mit dem Titel "Pulverpresse mit kegeligem Unterbau" hervorgehen, auf die diesbezüglich vollumfänglich im Rahmen der Offenbarung Bezug genommen wird.

Fig. 2 zeigt einen Querschnitt durch die Sinterpresse 12 aus Fig. 1, insbesondere durch die beiden Stempel 1, 2 und die Matrize 5. Zu erkennen ist hier besonders deutlich die Ausführung des Übergangs zwischen den jeweiligen kegelförmigen Abschnitten 13, 14 und den jeweiligen geraden Abschnitten 15, 16 der beiden Stempel 1, 2. Die kegelförmigen Abschnitte 13, 14 weisen jeweils eine Wanddicke 20 einer Wandung 23 auf, die an unterschiedlichen Stellen der kegelförmigen Abschnitte 13, 14 unterschiedlich groß ist. Weiterhin ist eine Wandöffnungen 21 eingezeichnet. Die Fig. 2 zeigt die Asymmetrie der Stempel 1, 2 bezüglich der Axialachse 6 deutlicher, als die Fig. 1.

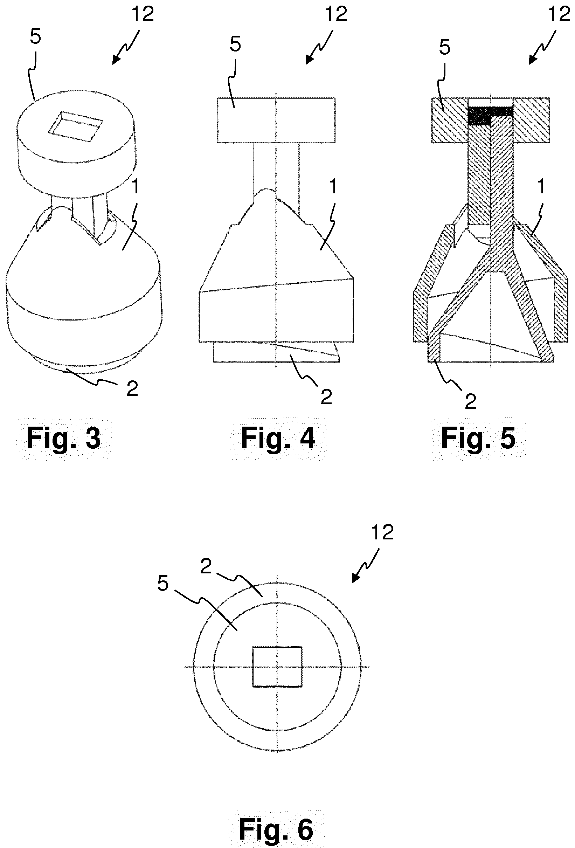

Die Fig. 3 bis 6 zeigen die Sinterpresse 12 aus den Fig. 1 und 2 vergleichend in verschiedenen Darstellungen. Fig. 3 ist eine perspektivische Ansicht von außen, Fig. 4 eine Seitenansicht von außen, Fig. 5 eine Querschnittsansicht aus der gleichen Perspektive, wie der in Fig. 4 dargestellten und Fig. 6 eine Draufsicht von außen. Hinsichtlich der verwendeten Bezugzeichen wird auf die obige Beschreibung der Fig. 1 und 2 verwiesen.

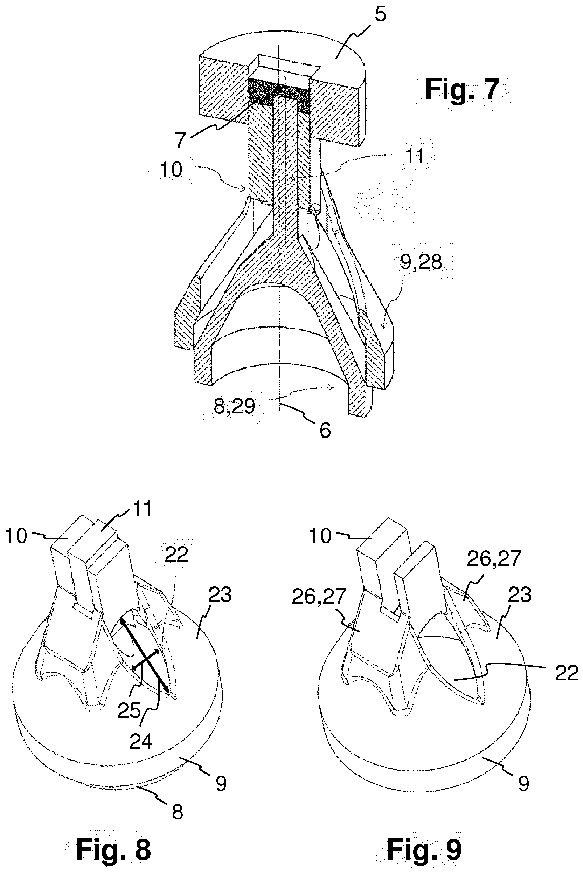

Fig. 7 zeigt eine perspektivische Schnittdarstellung einer weiteren Ausführungsform einer Sinterpresse 12, die zwei Stempel (einen inneren Stempel 8 und einen äußeren Stempel 9) aufweist, die in einer Matrize 5 verfahrbar sind. In dieser Ausführungsform stellt der äußere Stempel 9 einen Oberstempel 28 und der innere Stempel 8 einen Unterstempel 29 dar. Die beiden Stempelköpfe 10, 11 sind jeweils für sich asymmetrisch zu einer Axialachse 6 der Sinterpresse 12 ausgeführt und außermittig zu der Axialachse 6 angeordnet.

In der Matrize 5 kann ein Grünling 7 aus Pulver geformt werden. Beide Stempel 8, 9 sind derart ausgeführt, dass ein Biegemoment, das an dem jeweiligen Stempel 8, 9 anliegen kann, kompensiert werden kann. Der innere Stempel 8 weist einen inneren Stempelkopf 11 auf, der innerhalb eines äußeren Stempelkopfes 10 des äußeren Stempels 9 verfahrbar ist. Der äußere Stempelkopf 10 des äußeren Stempels 9 umgibt hierbei den inneren Stempelkopf 11, was in der Querschnittsdarstellung als ein Umgeben von zwei Seiten dargestellt ist. Auch hier wird die Bezeichnung Stempelkopf 10, 11 synonym mit dem weiter oben auch verwendeten Begriff "Kopfstück" verwendet. Durch die gezeigte Anordnung kann eine Biegeneigung der beiden Stempel 8, 9 reduziert werden. Damit kann eine Reibung zwischen den Stempeln 8, 9 untereinander, aber auch mit der Matrize 5 reduziert, insbesondere sogar vollständig eliminiert werden.

Fig. 8 zeigt einen Teil der Sinterpresse 12 aus Fig. 7 in einer Schrägansicht von außen. Zu erkennen sind der innere Stempel 8 mit dem inneren Stempelkopf 11 und der äußerer Stempel 9 mit dem äußeren Stempelkopf 10. Der äußere Stempel 9 weist einen Materialausschnitt 22 auf, der als ein Durchbruch durch eine Wandung 23 des äußeren Stempels 9 realisiert ist. Der Materialausschnitt 22 stellt eine der weiter oben beschriebenen Materialöffnungen dar, durch die die Asymmetrie des jeweiligen Stempels 8, 9 erzielt werden kann. Der Materialausschnitt 22 dient insbesondere dazu (wie ebenfalls weiter oben beschrieben) eine Asymmetrie im jeweiligen Stempel 8, 9 zu schaffen. Der Materialausschnitt 22 bzw. die Asymmetrie dient gegebenenfalls außerdem dazu einen Biegeausgleich zu schaffen, wodurch zum Beispiel einem Biegen des jeweiligen Stempelkopfs 10, 11 bzw. des jeweiligen Stempels 8, 9 in eine Richtung entgegengewirkt wird. Der Materialausschnitt 22 weist eine Längserstreckung 24 auf, die größer ist, als eine Umfangserstreckung 25.

Fig. 9 zeigt eine Schrägansicht des äußeren Stempels 9 aus Fig. 7 und Fig. 8, wobei der innere Stempel 8 in dieser Darstellung nicht gezeigt ist. Der äußere Stempel 9 weist Verdickungen 26 der Wandung 23, insbesondere in Form von Verstärkungen 27 auf. Weiterhin weist der äußere Stempel 9 Materialausschnitte 22 (von denen einer gezeigt ist) in der Wandung 23 auf. Die Verdickungen 26 und die Materialausschnitte 22 können dazu beitragen, eine Biegeneigung des äußeren Stempels 9 zu verringern.

**Bezugszeichenliste**

1 erster Stempel
2 zweiter Stempel
3 erster Stempelkopf
4 zweiter Stempelkopf
5 Matrize
6 Axialachse
7 Grünling
8 innerer Stempel
9 äußerer Stempel
10 äußerer Stempelkopf
11 innerer Stempelkopf
12 Sinterpresse
13 erster kegelförmiger Abschnitt
14 zweiter kegelförmiger Abschnitt
15 erster gerader Abschnitt
16 zweiter gerader Abschnitt
17 erster Stempelfuß
18 zweiter Stempelfuß
19 Spreizwinkel
20 Wanddicke
21 Wandöffnung
22 Materialausschnitt
23 Wandung
24 Längserstreckung
25 Umfangserstreckung
26 Verdickung
27 Verstärkung
28 Oberstempel
29 Unterstempel
30 Matrizenaußenwand
31 Pulverspeicher
32 Pulvermaterial
33 erste Bewegungsachse
34 zweite Bewegungsachse
35 Stirnfläche

**Patentansprüche**

1. Sinterpresse (12) mit zumindest zwei Stempeln, einem inneren Stempel (8) und einem äußeren Stempel (9), wobei der äußere Stempel (9) ein Oberstempel (28) und der innere Stempel (8) ein Unterstempel (29) ist, mit einem Pulverspeicher (31) zur Befüllung einer Matrize (5) der Sinterpresse (12) mit einem sinterfähigen Pulvermaterial (32) und mit einer Matrize (5) zur Herstellung eines Grünlings (7) mittels des Pulvermaterials (32) aus dem Pulverspeicher (31), wobei ein erster Stempel (1) der Oberstempel (28) und/oder Unterstempel (29) einen Stempelkopf (3) außermittig und asymmetrisch zu der Axialachse (6) der Sinterpresse (12) aufweist, der ohne eine Führung innerhalb der Matrize (5) entlang einer Matrizenaußenwand (30) und/oder entlang einem benachbarten Stempel (2) in der Matrize (5) bewegbar ist, wobei der Stempelkopf (3) auf eine Stirnfläche (35) des Grünlings (7) einwirkt, so dass eine beim Verpressen wirkende Axialkraft beabstandet zu der Axialachse (6) auf den ersten Stempel (1) einwirkt, wobei der erste Stempel (1) zwischen Stempelkopf (3) und Stempelfuß (17) eine asymmetrische Form besitzt, die ein axiales Kippen des Stempels (1) und ein Längsschleifen des Stempelkopfes (3) an einer benachbarten Außenfläche in der Matrize (5) beim Einfahren und Ausfahren daraus während eines Pressvorgangs bei der Herstellung des Grünlings (7) zumindest verringert, insbesondere verhindert.

2. Sinterpresse (12) nach Anspruch 1, wobei entlang eines Querschnitts des ersten Stempels (1) senkrecht zu seiner Bewegungsachse (33) die asymmetrische Form eine asymmetrische Wandung aufweist, insbesondere der erste Stempel (1) eine unterschiedliche Dicke (20) von gegenüberliegenden Seiten der Wandung (23) hat.

3. Sinterpresse (12) nach Anspruch 2, wobei die asymmetrische Wandung (23) eine mit Verstrebungen versehene Wandung ist.

4. Sinterpresse (12) nach Anspruch 1, 2 oder 3, wobei der erste Stempel (1) und ein zweiter Stempel (2) ineinander verfahrbar sind, wobei der zweite Stempel (2) ebenfalls eine asymmetrische Form zwischen Stempelkopf (4) und Fußstück (18) aufweist.

5. Sinterpresse (12) nach einem der vorhergehenden Ansprüche, wobei zumindest der erste Stempel (1) aus verschiedenen Teilen (13, 15) zusammengesetzt ist.

6. Sinterpresse (12) nach einem der vorhergehenden Ansprüche 1 bis 5, wobei der erste Stempel (1) eine asymmetrische Form in einem Bereich zwischen Stempelkopf (3) und Stempelfuß (17) aufweist, mit einem Stempelkopf (3), der außermittig und asymmetrisch zu einer Axialachse (6) der Sinterpresse (12) ist.

7. Berechnungsverfahren zur Auslegung eines Presswerkzeugs einer Sinterpresse (12) nach einem der Ansprüche 1 bis 4, wobei für einen ersten Stempel (1) des Presswerkzeugs, der einen Stempelkopf (3) außermittig und asymmetrisch zu einer Axialachse (6) der Sinterpresse (12) aufweist, eine Biegung berechnet wird, die sich bei einem Kraftzufluss wie auch bei einem Kraftabfluss bei einem Pressvorgang eines Grünlings (7) in der Sinterpresse (12) einstellt, und eine Steifigkeit des ersten Stempels (1) durch Anpassung einer Asymmetrie einer Form des ersten Stempels (1) zwischen Stempelkopf (3) und Stempelfuß (17) daran angepasst wird, wobei überprüft wird, ob ein Ausgleich eines Kippmoments am ersten Stempel (1), hervorgerufen durch die Außermittigkeit des Stempelkopfs (3), durch die Anpassung der Asymmetrie der Form sich verbessert hat.

8. Berechnungsverfahren nach Anspruch 7, wobei eine Randbedingung eingestellt wird, nach der der erste Stempel (1) unter Presslast ohne Verschiebung in eine Kipprichtung reagiert.

9. Berechnungsverfahren nach Anspruch 7 oder 8, wobei eine Topologieoptimierung am ersten Stempel (1) erfolgt, wobei mittels zumindest eines Optimierungsalgorithmus in einem vorgebbaren Designraum überprüft wird, durch welche Materialweglassung ein Verhalten des ersten Stempels (1) unter Presskraft die vorgebbaren Randparameter einhält, wobei der Designraum so eingestellt wird, dass dieser eine sich vom Stempelkopf (3) zum Stempelfuß (17) sich verbreiternde Form des ersten Stempels (1) umfasst, wobei vorzugsweise der Materialweglassung ein oder mehrere Materialaufdickungen vorhergehen oder nachfolgen.

10. Berechnungsverfahren nach einem der vorhergehenden Ansprüche, wobei das Verfahren ein Baukastensystem nutzt, aus dem verschiedene Teile (13, 15) eines ersten Stempels (1) jeweils als Modul entnehmbar und zusammensetzbar sind, wobei das jeweilige Modul unterschiedliche Geometrien, unterschiedliche Werkstoffe und unterschiedliche Herstellungsverfahren miteinander verbindet.

11. Verfahren zum Verpressen zumindest eines pulverförmigen Werkstoffs in einer Sinterpresse (12) zu einem zu sinternden Grünling (7), mit einem Einfahren von Oberstempel (28) und Unterstempeln (29) in eine Matrize (5), mit einem Befüllen der Matrize (5) mit dem pulverförmigen Werkstoff (32) und mit einem Verpressen des pulverförmigen Werkstoffs (32); wobei die Sinterpresse (12) zumindest zwei Stempel, einen inneren Stempel (8) und einen äußeren Stempel (9) aufweist, wobei der äußere Stempel (9) ein Oberstempel (28) und der innere Stempel (8) ein Unterstempel (29) ist; wobei ein Grünling (7) gebildet wird, der eine zu einer Axialachse (6) der Sinterpresse (12) unsymmetrische Geometrie mittels eines ersten Stempels (1) der Oberstempel (28) und/oder Unterstempel (29) erhält, wobei ein Stempelkopf (3) des ersten Stempels (1) auf eine Stirnfläche (35) des Grünlings (7) einwirkt, so dass eine beim Verpressen wirkende Axialkraft beabstandet zu der Axialachse (6) auf den ersten Stempel (1) einwirkt, wobei der erste Stempel (1) eine asymmetrische Wandung (23) aufweist und bei einem Einfahren und Ausfahren in die Matrize (5) radial belastungslos, insbesondere berührungslos an dieser vorbeifährt.

## Claims

1. Sintering press (12) having at least two punches, one inner punch (8) and one outer punch (9), wherein the outer punch (9) is an upper punch (28) and the inner punch (8) is a lower punch (29), having a powder store (31) for the filling of a die (5) of the sintering press (12) with a sinterable powder material (32), and having a die (5) for the production of a green product (7) by means of the powder material (32) from the powder store (31), wherein a first punch (1) of the upper punches (28) and/or lower punches (29) has a punch head (3) eccentrically and asymmetrically with respect to an axial axis (6) of the sintering press (12), which punch head is, without a guide, movable within the die (5) along a die outer wall (30) and/or along an adjacent punch (2) in the die (5), wherein the punch head (3) acts on a face surface (35) of the green product (7), so that an axial force exerted during pressing acts spaced apart from the axial axis (6) on the first punch (1), wherein the first punch (1) has, between punch head (3) and punch foot (17), an asymmetrical shape which at least reduces, in particular prevents, axial tilting of the punch (1) and grinding of the punch head (3) along an adjacent outer surface in the die (5) during the movement into and the movement out of said die during a pressing process during the production of the green product (7).

2. Sintering press (12) as claimed in claim 1, wherein along a cross section of the first punch (1) perpendicular to the movement axis (33) thereof, the asymmetrical shape has an asymmetrical wall, and in particular, the first punch (1) has a different thickness (20) of opposite sides of the wall (23).

3. Sintering press (12) as claimed in claim 2, wherein the asymmetrical wall (23) is a wall equipped with strut arrangements.

4. Sintering press (12) as claimed in claim 1, 2 or 3, wherein the first punch (1) and a second punch (2) are movable one inside the other, wherein the second punch (2) likewise has an asymmetrical shape between punch head (4) and foot piece (18).

5. Sintering press (12) as claimed in one of the preceding claims, wherein at least the first punch (1) is assembled from different parts (13, 15).

6. Sintering press (12) as claimed in one of the preceding claims 1 to 5, wherein the first punch (1) has an asymmetrical shape in a region between punch head (3) and punch foot (17), having a punch head (3) which is eccentric and asymmetrical with respect to an axial axis (6) of the sintering press (12).

7. Calculation method for the design of a pressing tool of a sintering press (12) as claimed in one of claims 1 to 4, wherein, for a first punch (1) of the pressing tool, which has a punch head (3) eccentric and asymmetrical with respect to an axial axis (6) of the sintering press (12), a degree of bending that occurs during an inflow of force and during an outflow of force during a process of pressing a green product (7) in the sintering press (12) is calculated, and a stiffness of the first punch (1) is adapted thereto through adaptation of an asymmetry of the shape of the first punch (1) between punch head (3) and punch foot (17), wherein it is checked whether a compensation of a tilting moment on the first punch (1) caused by the eccentricity of the punch head (3) has improved as a result of the adaptation of the asymmetry of the shape.

8. Calculation method as claimed in claim 7, wherein a boundary condition is set according to which the first punch (1) reacts, under pressing load, without displacement in a tilting direction.

9. Calculation method as claimed in claim 7 or 8, wherein a topology optimization is performed on the first punch (1), wherein, by means of at least one optimization algorithm, in a predefinable design space, it is checked what omission of material results in a behavior of the first punch (1) under pressing force adhering to the predefinable boundary parameters, wherein the design space is set such that it comprises a shape of the first punch (1) which widens from the punch head (3) to the punch foot (17), wherein preferably, the omission of material is preferably preceded or followed by one or more material thickenings.

10. Calculation method as claimed in one of the preceding claims, wherein in that the method utilizes a modular system from which different parts (13, 15) of a first punch (1), in each case as a module, can be taken and assembled, wherein the respective module connects different geometries, different materials and different production methods with one another.

11. Method for compressing at least one powder material in a sintering press (12) to form a green product (7) for sintering, comprising a movement of upper punch (28) and lower punches (29) into a die (5), comprising a filling of the die (5) with the powder material (32), and comprising a compression of the powder material (32), wherein the sintering press (12) has at least two punches, one inner punch (8) and one outer punch (9), wherein the outer punch (9) is an upper punch (28) and the inner punch (8) is a lower punch (29); wherein a green product (7) is formed, which green product has a geometry asymmetrical with respect to an axial axis (6) of the sintering press (12) imparted to it by means of a first punch (1) of the upper punches (28) and/or lower punches (29), wherein a punch head (3) of the first punch (1) acts on a face surface (35) of the green product (7), so that an axial force exerted during pressing acts spaced apart from the axial axis (6) on the first punch (1), wherein the first punch (1) has an asymmetrical wall (23) and, during a movement into and out of the die (5), moves past the latter in a radially load-free, in particular contact-free manner.

**Revendications**

1.  Presse de frittage (12) munie d'au moins deux pistons, un piston intérieur (8) et un piston extérieur (9), dans laquelle le piston extérieur (9) étant un piston supérieur (28) et le piston intérieur (8) étant un piston inférieur (29), munie d'un réservoir à poudre (31) pour le remplissage d'une matrice (5) de la presse de frittage (12) avec un matériau pulvérulent frittable (32) et munie d'une matrice (5) pour la fabrication d'un comprimé cru (7) au moyen du matériau pulvérulent (32) issu du réservoir à poudre (31), un premier piston (1) parmi le piston supérieur (28) et/ou le piston inférieur (29) comprenant une tête de piston (3) excentrique et asymétrique par rapport à l'axe axial (6) de la presse de frittage (12), qui peut être déplacée sans guidage à l'intérieur de la matrice (5) le long d'une paroi extérieure de matrice (30) et/ou le long d'un piston voisin (2) dans la matrice (5), la tête de piston (3) agissant sur une surface frontale (35) du comprimé cru (7), de telle sorte qu'une force axiale agissant lors de la compression agisse sur le premier piston (1) à distance de l'axe axial (6), le premier piston (1) présentant, entre la tête de piston (3) et le pied de piston (17), une forme asymétrique qui au moins réduit, en particulier empêche, un basculement axial du piston (1) et un frottement longitudinal de la tête de piston (3) sur une surface extérieure voisine dans la matrice (5) lors de l'entrée dans et de la sortie de celle-ci pendant un processus de pressage lors de la fabrication du comprimé cru (7).

2.  Presse de frittage (12) selon la revendication 1, dans laquelle la forme asymétrique comprend une paroi asymétrique le long d'une section transversale du premier piston (1) perpendiculairement à son axe de déplacement (33), en particulier le premier piston (1) a une épaisseur différente (20) de côtés opposés de la paroi (23).

3.  Presse de frittage (12) selon la revendication 2, dans laquelle la paroi asymétrique (23) est une paroi munie d'entretoises.

4.  Presse de frittage (12) selon la revendication 1, 2 ou 3, dans laquelle le premier piston (1) et un deuxième piston (2) peuvent pénétrer l'un dans l'autre, le deuxième piston (2) présentant également une forme asymétrique entre la tête de piston (4) et l'élément de pied (18).

5.  Presse de frittage (12) selon l'une quelconque des revendications précédentes, dans laquelle au moins le premier piston (1) est assemblé à partir de diverses parties (13, 15).

6.  Presse de frittage (12) selon l'une quelconque des revendications 1 à 5 précédentes, dans laquelle le premier piston (1) présente une forme asymétrique dans une zone entre la tête de piston (3) et le pied de piston (17), avec une tête de piston (3) qui est excentrique et asymétrique par rapport à un axe axial (6) de la presse de frittage (12).

7.  Procédé de calcul pour le dimensionnement d'un outil de pressage d'une presse de frittage (12) selon l'une quelconque des revendications 1 à 4, dans lequel, pour un premier piston (1) de l'outil de pressage, qui comprend une tête de piston (3) excentrique et asymétrique par rapport à un axe axial (6) de la presse de frittage (12), une courbure est calculée, qui s'établit lors d'un flux entrant de force tout comme lors d'un flux sortant de force lors d'un processus de pressage d'un comprimé cru (7) dans la presse de frittage (12), et une rigidité du premier piston (1) est adaptée à celle-ci par adaptation d'une asymétrie d'une forme du premier piston (1) entre la tête de piston (3) et le pied de piston (17), dans lequel il est vérifié si une compensation d'un moment de basculement sur le premier piston (1), causé par l'excentricité de la tête de piston (3), s'est améliorée par l'adaptation de l'asymétrie de la forme.

8.  Procédé de calcul selon la revendication 7, dans lequel une condition limite est établie, selon laquelle le premier piston (1) réagit sous une charge de pressage sans décalage dans une direction de basculement.

9.  Procédé de calcul selon la revendication 7 ou 8, dans lequel une optimisation de topologie a lieu sur le premier piston (1), dans lequel il est vérifié, au moyen d'au moins un algorithme d'optimisation dans un espace de conception prédéterminable, par quelle omission de matériau un comportement du premier piston (1) sous une force de pressage respecte les paramètres limites prédéterminables, l'espace de conception étant établi de telle sorte que celui-ci comporte une forme du premier piston (1) qui s'élargit depuis la tête de piston (3) jusqu'au pied de piston (17), un ou plusieurs épaississements de matériau précédant ou suivant de préférence l'omission de matériau.

**10.** Procédé de calcul selon l'une quelconque des revendications précédentes, dans lequel le procédé utilise un système de blocs de construction, à partir duquel diverses parties (13, 15) d'un premier piston (1) peuvent être extraites et assemblées respectivement en tant que module, le module respectif reliant différentes géométries, différents matériaux et différents procédés de fabrication les uns aux autres.

**11.** Procédé de compression d'au moins un matériau pulvérulent dans une presse de frittage (12) en un comprimé cru à fritter (7), comprenant une entrée d'un piston supérieur (28) et de pistons inférieurs (29) dans une matrice (5), comprenant un remplissage de la matrice (5) avec le matériau pulvérulent (32) et comprenant une compression du matériau pulvérulent (32) ; dans lequel la presse de frittage (12) comprend au moins deux pistons, un piston intérieur (8) et un piston extérieur (9), le piston extérieur (9) étant un piston supérieur (28) et le piston intérieur (8) étant un piston inférieur (29) ; un comprimé cru (7) étant formé, qui obtient une géométrie non symétrique par rapport à un axe axial (6) de la presse de frittage (12) au moyen d'un premier piston (1) parmi le piston supérieur (28) et/ou le piston inférieur (29), une tête de piston (3) du premier piston (1) agissant sur une surface frontale (35) du comprimé cru (7), de telle sorte qu'une force axiale agissant lors de la compression agisse sur le premier piston (1) à distance de l'axe axial (6), le premier piston (1) comprenant une paroi asymétrique (23) et, lors d'une entrée dans et sortie de la matrice (5), passant devant celle-ci radialement sans sollicitation, notamment sans contact.

**Fig. 1**

32

**Fig. 2**

**Fig. 3**

**Fig. 4**

**Fig. 5**

**Fig. 6**

5

**Fig. 7**

7

10

11

9,28

8,29

6

11

10

22

23

25

24

9

8

**Fig. 8**

10

26,27

26,27

23

22

9

**Fig. 9**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- SU 1041209 A1
- JP 2014001429 A
- DE 102014003726
- DE 10201501784
- DE 10201501785
- DE 102014201966